# EUROPEAN PATENT APPLICATION

(11) **EP 1 886 553 A2**
(43) Date of publication of application: **13.02.2008**
(21) Application number: 06255526.3
(22) Date of filing: 26.10.2006
(51) Int. Cl.: A01K 1/00, A01K 3/00

(54) **Electrified gate**

(30) Priority: 07.08.2006 GB 0615618
(71) Applicant: Bray, Nicholas Palmes, Highfield, Story Lane Holwell, Nr. Sherborne Dorset, DT9 5LJ (GB)
(72) Inventor: Bray, Nicholas Palmes, Highfield, Story Lane Holwell, Nr. Sherborne Dorset, DT9 5LJ (GB)
(74) Representative: Hansford, Katherine Joy

(57) **Abstract**

Electrically conductive rods (14,16) across a gateway are electrified by a voltage amplifier (24), powered from a dry cell battery (26) by way of a PIR sensor (34), to provide a deterrent to animals. The PIR sensor (34) is physically located to overlook the gateway guarded by the rods (14,16). When the PIR sensor (34) senses the presence of an animal at or near the gateway it automatically causes power from the battery (26) to be delivered to the voltage amplifier (24), which in turn charges the rods (14,16). Otherwise the battery (26) is isolated from the voltage amplifier (24), whereby the voltage amplifier (24) is not activated and the rods (14,16) are not charged unless or until energised in response to the PIR sensor (34). An LED shows when the rods (14,16) are electrified and a manually operable switch (28) allows the battery (26) to be disconnected for maintenance etc.

## Description

This invention concerns the electrification of gates, which is to say arranging a gate so that it gives an electric shock to any animal which touches it, thereby in use serving to contain livestock even though the gate is free to open at any time to allow vehicles to pass through.

Electric fences have been used to contain livestock for many decades. Such fences comprise a bare electrically conductive wire connected to one terminal of a power energiser having a second terminal connected to earth. If an animal touches the bare wire it completes a circuit through the earth and is subject to an electric shock painful enough to deter the animal from trying to go beyond the fence.

Some form of gate is needed to allow people or vehicles to enter or leave a fenced area. However conventional gates are both costly and substantially permanent and also cause inconvenience insofar as users need to open and close them manually. In Patent Number GB 925 683 I have described an arrangement designed to overcome these problems, which arrangement includes a gate which is self-closing and comprises at least one rail adapted to be charged by electricity, the gate being openable by the engagement thereof by a land or road vehicle without the need for the driver thereof to stop and open and shut the gate manually.

As described in Patent Number GB 925 683 the charged rail of the gate is connected to the energised wire of an electric fence. However there are many locations without an electric fence, or even a suitable local source of power, which nevertheless require an electrified gate. Such a gate may in principle be powered from a battery, but even modern solid state energisers will cause an unacceptably rapid battery drain.

It is an object of the present invention to provide a improvements upon the arrangement of Patent Number GB 925 683 whereby an electrified gate may be self-contained.

Thus according to a first aspect of the invention there is provided an electrical shocking mechanism for use with a gate for containing livestock, characterised in that the electrical shocking mechanism remains dormant unless and until activated by the presence of an animal.

The mechanism may include a proximity switch or a passive infra-red (PIR) switch configured and arranged to respond to the presence of said animal. Further, the mechanism when activated may deliver an intermittent or pulsating high tension shock to the animal.

According to a second aspect of the invention there is provided an electrified gate for deterring animals from passing through an opening, which gate comprises a first electrically conductive rod extending transversely of the opening, an electrical drive circuit connected to the first rod and a sensor operative to sense the presence of an animal at the opening, characterised in that the drive circuit is operatively connected to the sensor so as to energise the first rod only when the sensor senses the presence of an animal at the opening.

Preferably the drive circuit is powered from an electrical battery, preferably a dry cell battery, which may be contained in a housing providing a hinge for the first rod.

The first rod may extend transversely from one side of the opening and the gate may comprise a second electrically conductive rod extending transversely from the other side of the opening, an insulated electrical lead extending from the second rod and transversely of the opening to the drive circuit.

Preferably the or each hinge is configured and arranged to allow the or each rod to open in either direction from the opening and preferably also the or each hinge is arranged to be self-closing.

The drive circuit may include (a) a manually operable switch whereby the battery may be alternatively connected and disconnected, (b) a light emitting diode providing a visual indication when the or each rod is energised and/or (c) a voltage amplifier having a positively charged electrode connected to the first rod and a negatively charged electrode connected to earth.

The sensor may be touch-sensitive, or it may be proximity-sensitive and possibly comprise a passive infra-red (PIR) detector.

The or each rod may have an outer covering of electrically conductive material, which may be electrostatically foraminated to improve its conductivity (and thereby allow lower charge voltages to be effective).

The gate may include an insulated handle whereby the gate may be opened manually and may also include a detent to hold the gate in an open position.

It will now be appreciated that in a third aspect the invention provides an electric charging device for an animal barrier characterised in that said device is activated automatically to charge the barrier by the presence of a said animal.

In a fourth aspect the invention extends to the provision, in an electrified barrier, of an outer covering comprising electrically conductive material electrostatically foraminated to improve its conductivity.

Other features of the invention will be apparent from the following description, which is made by way of example only and with reference to the accompanying schematic drawing, in which -
Figure 1 illustrates an electrified gate embodying the invention;
Figure 2 shows to an enlarged scale part of the gate of Figure 1; and
Figure 3 is an electrical circuit schematic for the gate of the invention.

Before referring to the accompanying drawing, reference is directed first to Patent Number GB 925 683, which describes and illustrates a gate comprising an electrified rail ***a*** fitted in and carried by a hinge ***d*** in turn fixed to a side post ***C*** of the gate by upper and lower hinge units in the form of electrically insulative sleeves ***e***. The starting point for the present invention is the addition to either of the hinge units of a housing for an electrical shocking mechanism comprising a low voltage dry cell battery with voltage amplification and triggering or switching circuitry. The electrical shocking mechanism of the present invention is dormant, using no power, unless and until switched on by an animal touching the rail, when the animal is subjected to a high voltage electric shock. Once charged, the mechanism draws no further power from the battery unless a circuit is completed in the usual way, resulting in a shock to the animal which causes it to retreat from the gate. Thus there is no drain from the battery, which remains at rest unless triggered.

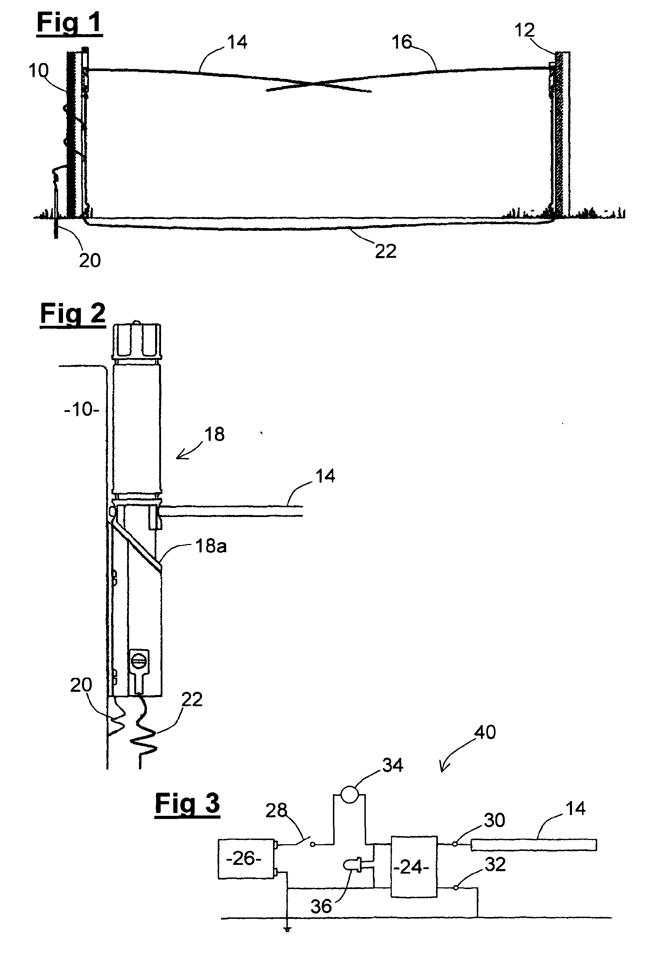

Referring now to Figure 1 of the accompanying drawing, this shows first and second gateposts 10 and 12 located respectively on opposite sides of an opening. A first rod 14 is hinged to the first gatepost 10 and extends transversely of the opening and a second rod 16 is hinged to the second gatepost 12 and also extends transversely of the opening, the two rods 14, 16 overlapping at their free ends to form a barrier across the opening as shown in Figure 1. Each of the rods 14, 16 is electrically conductive and may be electrified to provide a deterrent to livestock or other animals, as will be described in more detail hereinafter.

Referring now to Figure 2, this shows that the first rod 14 is mounted upon a housing indicated generally at 18. Within the housing 18 (but not illustrated in detail in Figure 2) is a dry cell electrical battery arranged to power a drive circuit for charging the rod 14. For this purpose the drive circuit has a positively charged terminal connected to the rod 14 and a negatively charged terminal 20 connected to earth. An insulated lead 22 extends from the positively charged terminal, under the opening, to provide a charging connection to the second rod 16. If an animal touches either rod 14 or 16 when charged, it completes a circuit through the earth and is subject to an electric shock painful enough to deter the animal from trying to go through the opening.

As can be seen from Figure 2, the housing 18 provides a hinge for the first rod 14, whereby the rod 14 may be pushed open by a vehicle needing to pass through the opening. This hinge has an inclined face 18a which, in the fashion well known with rising butt hinges, serves by the action of gravity (possibly assisted by a spring, not shown) to return the rod 14 automatically to its original position after it has been opened. It is to be understood that the second rod 16 is also mounted upon a self-closing hinge. Thus, when a vehicle passes through the opening, there is no need for its driver to stop to move the rods 14, 16 between their closed and open positions.

The electrical shocking mechanism indicated generally at 40 in Figure 3 includes a voltage amplifier 24 powered from a dry cell battery 26. The voltage amplifier may be of any form appropriate for charging an electrified barrier: for instance it may comprise a capacitor charged by way of a solid state device, the charge being released through a thyristor or the like when an animal touches either of the rods 14, 16. The connection between the battery 26 and the voltage amplifier 24 includes a manually operable switch 28 to allow personnel to disable the charging action eg for maintenance of the gate.

The voltage amplifier 24 has a positively charged terminal 30 connected to the first rod 14 and a negatively charged terminal 32 connected to earth. A passive infra-red (PIR) sensor 34 is arranged galvanically in the line between the battery 26 and the voltage amplifier 24 and physically located to overlook the opening guarded by the rods 14, 16. When the PIR sensor 34 senses the presence of an animal at or near the opening it automatically causes power from the battery 26 to be delivered to the voltage amplifier 24, which in turn charges the rods 14, 16. Otherwise the battery 26 is isolated from the voltage amplifier 24, whereby the voltage amplifier 24 is not activated and the rods 14, 16 are not charged unless or until energised in response to the PIR sensor 34.

As the voltage amplifier is activated only in the presence of an animal (or some other substantial mass such as a person or a vehicle detected by the PIR sensor) there is a considerable power saving. This enables an effectively self-contained electrified gate to be provided, powered by a compact and convenient dry cell battery that remains effective over a long time because power is conserved.

The voltage amplifier may be arranged to deliver a pulsed or intermittent charge to the rods 14, 16. Also, for the comfort and convenience of personnel, the electrical circuit of the charging device includes a light emitting diode (LED) 36 arranged to show when the voltage amplifier 24 is activated and the rods 14, 16 charged.

The rod 14 (and similarly the rod 16) has a core of glass reinforced plastics material with an outer covering of electrically conductive rubber. To improve the effectiveness of the electrification, with a (comparatively small) dry cell battery, the rubber of the outer covering is electrostatically foraminated to improve its conductivity. That is to say the rubber (before application to the rod) is subjected to multiple electric sparks which pierce the rubber and by carbonisation create multiple electrically conductive paths therethrough. This allows charge voltages below 5kV to be effective.

Various modifications and adaptations are possible. For instance the PIR sensor 34 may be replaced by a capacitive or other touch switch or proximity switch. The barrier may have a spring or other kind of closure device to supplement or replace the rising butt hinges. An insulated handle may be provided to allow the gate to be safely opened by hand.

Whilst the invention has been described as providing a barrier across a gateway of regular width (ie at least wide enough to allow passage of a farm vehicle) it may alternatively be embodied on a smaller scale, for instance to provide a barrier to stop stock from entering a public footpath or right of way. Such an embodiment preferably includes an insulated handle and may have only one rod, and possibly a detent to hold the barrier in its fully open position.

Other possible modifications and adaptations will be apparent to those skilled in the science.

For the avoidance of doubt it should be noted that the invention is intended to comply with all regulations for the time being in force with respect to electric fencing, including any limits specified for voltage level and pulse duration.

## Claims

1. An electrical shocking mechanism for use with a gate for containing livestock, **characterised in that** the electrical shocking mechanism (40) remains dormant unless and until activated by the presence of an animal.

2. An electrical shocking mechanism as claimed in Claim 1 **characterised in that** the mechanism (40) includes a PIR switch (34) configured and arranged to respond to the presence of said animal.

3. An electrical shocking mechanism as claimed in Claim 1 **characterised in that** the mechanism (40) includes a proximity switch configured and arranged to respond to the presence of said animal.

4. An electrical shocking mechanism as claimed in any preceding claim **characterised in that** the mechanism when activated delivers an intermittent or pulsating high tension shock to the animal.

5. An electrified gate for deterring animals from passing through an opening, which gate comprises a first electrically conductive rod (14) extending transversely of the opening, an electrical drive circuit (40) connected to the first rod (14) and a sensor (34) operative to sense the presence of an animal at the opening, **characterised in that** the drive circuit (40) is operatively connected to the sensor (34) so as to energise the first rod (14) only when the sensor senses the presence of an animal at the opening.

6. An electrified gate as claimed in Claim 5 **characterised in that** the drive circuit (40) is powered by an electrical battery (26).

7. An electrified gate as claimed in Claim 6 **characterised in that** the electrical battery (26) is a dry cell battery.

8. An electrified gate as claimed in Claim 6 or Claim 7 **characterised in that** the electrical battery (26) is contained in a housing (18) providing a hinge for the first rod (14).

9. An electrified gate as claimed in any of Claims 5 to 8 **characterised in that** the first rod (14) extends transversely from one side of the opening and the gate comprises a second electrically conductive rod (16) extending transversely from the other side of the opening, an insulated electrical lead (22) extending from the second rod (16) and transversely of the opening to the drive circuit (40).

10. An electrified gate as claimed in any of Claims 5 to 9 **characterised in that** the or each rod (14, 16) has a hinge configured and arranged to allow the or each rod (14, 16) to open in either direction from the opening.

11. An electrified gate as claimed in Claim 10 **characterised in that** the or each hinge is configured and arranged to be self-closing.

12. An electrified gate as claimed in any of Claims 5 to 11 **characterised in that** the drive circuit (40) includes a manually operable switch (28) whereby the battery (26) may be alternatively connected and disconnected.

13. An electrified gate as claimed in any of Claims 5 to 12 **characterised in that** the drive circuit (40) includes a light emitting diode (36) providing a visual indication when the or each rod (14, 16) is energised.

14. An electrified gate as claimed in any of Claims 5 to 13 **characterised in that** the drive circuit (40) includes a voltage amplifier having a positively charged electrode connected to the first rod and a negatively charged electrode connected to earth.

15. An electrified gate as claimed in any of Claims 5 to 14 **characterised in that** the sensor (34) is touch-sensitive.

16. An electrified gate as claimed in any of Claims 5 to 15 **characterised in that** the sensor (34) is proximity-sensitive.

17. An electrified gate as claimed in Claim 16 **characterised in that** the sensor (34) comprises a passive infra-red detector.

18. An electrified gate as claimed in any of Claims 5 to 17 **characterised in that** the or each rod (14, 16) has an outer covering of electrically conductive rubber.

19. An electrified gate as claimed in Claim 18 **characterised in that** said rubber is electrostatically foraminated.

20. An electrified gate as claimed in any of Claims 5 to 19 **characterised in that** said gate includes an insulated handle whereby the gate may be opened manually.

21. An electrified gate as claimed in any of Claims 5 to 20 **characterised in that** said gate includes a detent to hold the gate in an open position.

22. An electric charging device (40) for an animal barrier **characterised in that** said device is activated automatically to charge the barrier by the presence of a said animal.

23. An outer covering for an electrified barrier, **characterised in that** said covering comprises electrically conductive material electrostatically foraminated to improve its conductivity.
